# EUROPEAN PATENT SPECIFICATION

(11) **EP 2 682 672 B1**
(45) Date of publication and mention of the grant of the patent: **13.04.2016**
(21) Application number: 13173795.9
(22) Date of filing: 26.06.2013
(51) Int. Cl.: F21S 8/10, F21V 29/00

(54) **LED lighting unit for a vehicle**
LED-Beleuchtungseinheit für ein Fahrzeug
Unité d'éclairage à DEL pour véhicule

(30) Priority: 03.07.2012 JP 2012149803
(43) Date of publication of application: 08.01.2014
(73) Proprietor: Honda Motor Co., Ltd., Tokyo 107-8556 (JP)
(72) Inventor: Monma, Eikichi, Wako-shi Saitama 351-0193 (JP); Kido, Seiji, Wako-shi Saitama 351-0193 (JP)
(74) Representative: Stevens, Jason Paul

(56) References cited:
- EP-A2- 2 148 133
- DE-A1-102007 024 962
- DE-A1-102009 022 848
- US-A1- 2009 251 916

## Description

The present invention relates to an LED lighting unit for a vehicle, and more particularly to an LED lighting unit for a vehicle wherein a light emitting diode (used as a light source) and a board for the lighting unit can be cooled efficiently.

Lighting units for motorcycles are known, wherein a light emitting diode (LED) is used as a light source. The LED is small in size in comparison with an incandescent bulb, and can allow the size of the lighting unit to be reduced. However, since the LED is an electronic part mounted on the surface of an electronic board, and the importance of thermal management increases together with an increase of the light amount of the LED, a different scheme from that for an incandescent bulb may be required for the arrangement structure of the LED.

Japanese Patent Laid-Open No. 2008-192313 discloses an LED lighting unit which has two kinds of reflectors for a low beam and a high beam and wherein changeover between a low beam and a high beam is carried out by changing the irradiation direction of the LED using an actuator. In this lighting unit, a heat sink as a cooling mechanism is provided at a side portion of an LED board which is pivotally moved by the actuator.

Japanese Patent Laid-Open No. 2004-342574 discloses another LED lighting unit for a vehicle wherein a board on which an LED for a low beam is mounted and a board on which another LED for a high beam is mounted are disposed in a spaced relationship from each other, such that the LED mounting faces for the LEDs are directed in upward and downward directions.

According to the LED lighting unit disclosed in Japanese Patent Laid-Open No. 2004-342574, a low beam and a high beam can be provided by a simple structure, without using an actuator as in Japanese Patent Laid-Open No. 2008-192313. However, a cooling mechanism such as the heat sink disclosed in Japanese Patent Laid-Open No. 2008-192313 is not provided, and there is room for improvement in the thermal management.

On the other hand, where the shape and the disposition of the heat sink disclosed in Japanese Patent Laid-Open No. 2008-192313 are applied, it is difficult to assure a great capacity. Further, since the heat sink is visible from the outside of the lighting unit, there is a problem that the appearance of the lighting unit is deteriorated.

Other forms of LED lighting unit are disclosed in US 2009/0251916, EP 2148133, and DE 102007024962.

It is an object of at least the preferred embodiments of the present invention to provide a lighting unit for a motorcycle which can efficiently cool heat generated from an LED apparatus while an LED for a low beam and another LED for a high beam are provided separately and independently of each other.

According to a first aspect of the present invention, there is provided an LED lighting unit for a vehicle, said unit including two plate-like members on which LED apparatus are mounted as light sources, and reflectors disposed so as to cover the LED apparatus and configured to reflect light from the LED apparatus forwardly relative to the vehicle, wherein the two plate-like members are disposed in an opposing relationship to each other with a space provided therebetween such that the mounting faces of the plate-like members to which the LED apparatus are mounted face away from the space, and wherein cooling fins are provided on the two plate-like members so as to extend into the space in an opposing relationship to each other; characterized in that the cooling fins are formed so as to overlap with each other in the vertical direction without contacting each other when the two plate-like members are fixed; in that erected portions having a face substantially perpendicular to the mounting faces of the LED apparatus are formed at one end portion of the plate-like members to the rear of the reflectors, and second cooling fins are provided on the erected portions; and in that the second cooling fins are formed on both faces of the erected portions, and the second cooling fins on the front faces of the erected portions are formed so as to extend to a position in proximity to the reflectors conforming with a shape of the reflectors.

According to this aspect, the cooling fins are provided on the two plate-like members so as to extend in an opposing relationship to each other toward the space. Therefore, heat generated from the LEDs as light sources can be dissipated from the sides of the plate-like members opposite to the mounting faces. Further, since the heat dissipation portion can be assured by a size of the plate-like members, a large heat dissipation area can be assured. Furthermore, since the cooling fins which configure a heat sink are disposed at a position at which they are less liable to be visible from the outside, the appearance of the LED lighting unit is not degraded. Further, with this arrangement, the vertical dimension of the cooling fins can be increased.

Further, by the provision of the erected portions, the disposition space for the cooling fins can be expanded to enhance the cooling performance. In addition, the cooling fins can be formed in an increased size.

Preferably, the cooling fins are disposed such that a longitudinal (lengthways) direction thereof is perpendicular to a longitudinal (lengthways) direction of the two plate-like members.

With this arrangement, a large number of cooling fins can be formed, and the heat of the plate-like members can be dissipated effectively.

Preferably, the plate-like members and the reflectors are formed separately from each other.

Thus, the shape of the plate-like members is less likely to be influenced by the shape of the reflectors, and the degree of freedom for the designer in shaping the plate-like members is enhanced, and besides a great disposition space can be assured for the cooling fins. Further, various LED lighting units can be configured by changing only the reflectors.

Preferably, one of the two plate-like members configures a high beam while the other of the two plate-like members configures a low beam.

With this arrangement, the cooling fins can be formed without complicating the shape of the plate-like members, and the space between the plate-like members for high and low beams can be utilized effectively as a disposition space for the cooling fins.

Preferably, the two plate-like members are spaced from and fixed to each other with a spacer interposed therebetween, and the cooling fins are disposed so as not to contact any other member in the vertical direction thereof.

With this arrangement, the assembling property is improved, and also the cooling performance for the LEDs and so forth can be improved.

Preferably, the two plate-like members have the same shape as each other. Thus, by fabricating a common mould, the productivity can be improved.

Preferred embodiments of the invention will now be described by way of example only, and with reference to the accompanying drawings, in which:
FIG. 1 is a front elevational view of a motorcycle to which an LED lighting unit according to a first embodiment of the invention is applied;
FIG. 2 is a front elevational view of the LED lighting unit;
FIG. 3 is a front elevational view of the LED lighting unit with an outer lens and an extension removed;
FIG. 4 is a perspective view of an LED unit;
FIG. 5 is a perspective view of an LED lighting unit for a vehicle according to a further aspect of the invention;
FIG. 6 is a perspective view of an LED unit according to a further aspect of the invention; and
FIG. 7 is a front elevational view showing an example wherein LED units having the same structure are used as left and right headlamps.

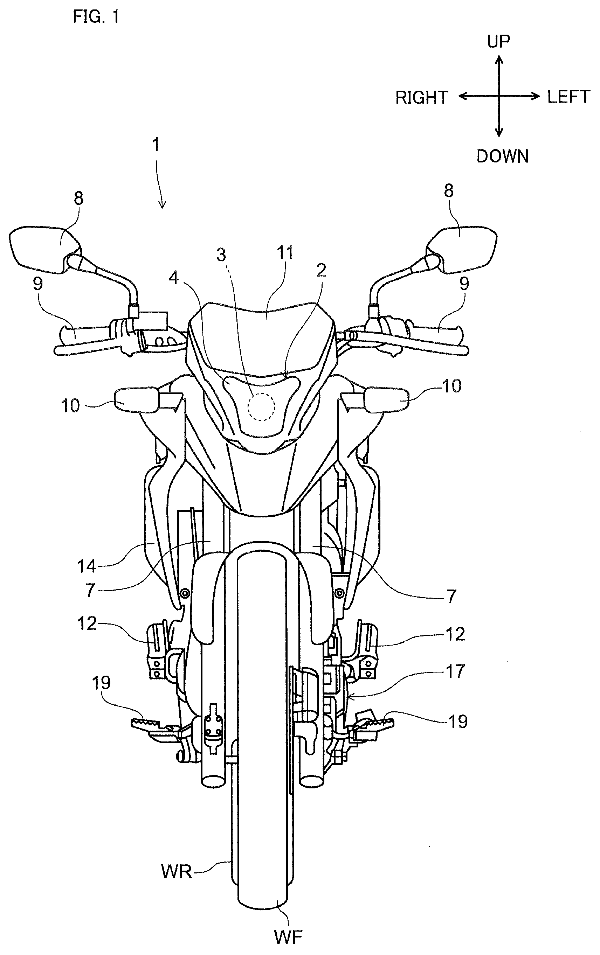

A preferred embodiment of the present invention will now be described in detail with reference to the drawings. FIG. 1 is a front elevational view of a motorcycle 1 to which an LED lighting unit 2 according to an embodiment of the present invention is applied. A front wheel WF of the motorcycle 1 is supported on a vehicle body frame (not shown) by a pair of front forks 7. A steering handlebar 9 for steering the front wheel WF is attached to an upper portion of the front forks 7, and a pair of left and right rear-view mirrors 8 are fixed to the steering handlebar 9. An engine 17 is disposed substantially in the longitudinal centre of the vehicle body between the front wheel WF and a rear wheel WR. Further, a pair of left and right foot placing steps 19 are attached to a lower portion of the engine 17, and foot placing steps 12 for a passenger are attached to the vehicle body behind the engine 17.

The front forks 7 are covered at an upper portion thereof with cowlings 14 as a pair of laterally external parts, and winker devices (indicators) 10 are attached on the cowlings 14. A front cowl 11 is attached to the front side of the vehicle body above the cowlings 14. The LED lighting unit 2 for a vehicle (hereinafter referred to sometimes merely as "LED lighting unit") according to the present invention is attached to the rear face of the front cowl 11.

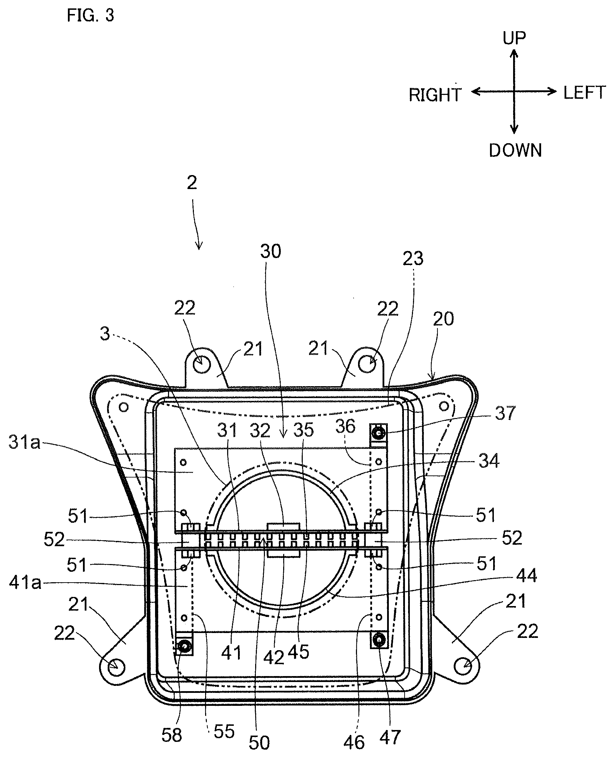

The LED lighting unit 2 is a headlamp which uses a light emitting diode as a light source. A through-hole 3 is provided in an extension 23 (see also FIG. 3) disposed on the inner side of an outer lens 4 such that a reflector for reflecting light from the LED forwardly of the vehicle is exposed therethrough.

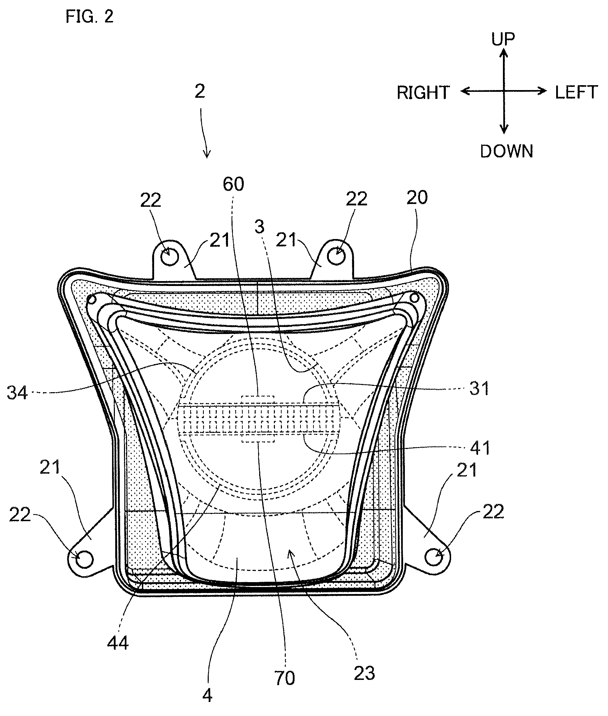

FIG. 2 is a front elevational view of the LED lighting unit 2, and FIG. 3 is a front elevational view of the LED lighting unit 2 in a state in which the outer lens 4 and the extension 23 have been removed. The LED lighting unit 2 is configured by attaching an LED unit 30 to a base member 20 which is attached to the vehicle body side, attaching the extension 23 so as to cover the LED unit 30, and further attaching the outer lens 4. The outer lens 4 has a shape conforming to the outline shape of the base member 20. The extension 23 and the outer lens 4 are fixed to the base member 20.

Four attachment stays 21 for attaching the LED lighting unit 2 to the front cowl 11 are provided on a peripheral edge of the base member 20, which is formed from a resin of a black colour or the like. The LED lighting unit 2 is configured such that, when it is attached to the rear of the front cowl 11 using threaded holes 22 formed in the attachment stays 21, only the part of the lens face of the LED lighting unit 2 within the broken lines in the drawings is exposed and visible from in front of the vehicle through the opening of the front cowl 11.

The LED unit 30 includes LED apparatus 60 and 70 formed from LEDs 32a and 42a and boards 32 and 42 which support the LEDs 32a and 42a, respectively. The LED unit 30 is supported so that it can pivot with respect to the base member 20, around a lower portion of the left side of the LED unit 30 (relative to the vehicle in use) with a support shaft 47 as a centre of rotation. Further, the LED unit 30 is configured such that adjustment of the optical axis in the vertical direction can be carried out by an adjustment mechanism 37 provided at an upper portion of the left side of the LED unit 30 (again, relative to the vehicle in use). The LED unit 30 is further configured such that adjustment of the optical axis in the horizontal direction can be carried out by another adjustment mechanism 58, provided at a lower portion of the right side of the LED unit 30 relative to the vehicle in use.

The extension 23 is formed from a coloured transparent resin, for example of a smoke colour, and has a function that only reflectors 34 and 44, which reflect light from the light source forwardly of the vehicle, are exposed and visible from the front of the vehicle through the through-hole 3, and portions other than the reflectors 34 and 44 are masked so that they are not visible from the outside.

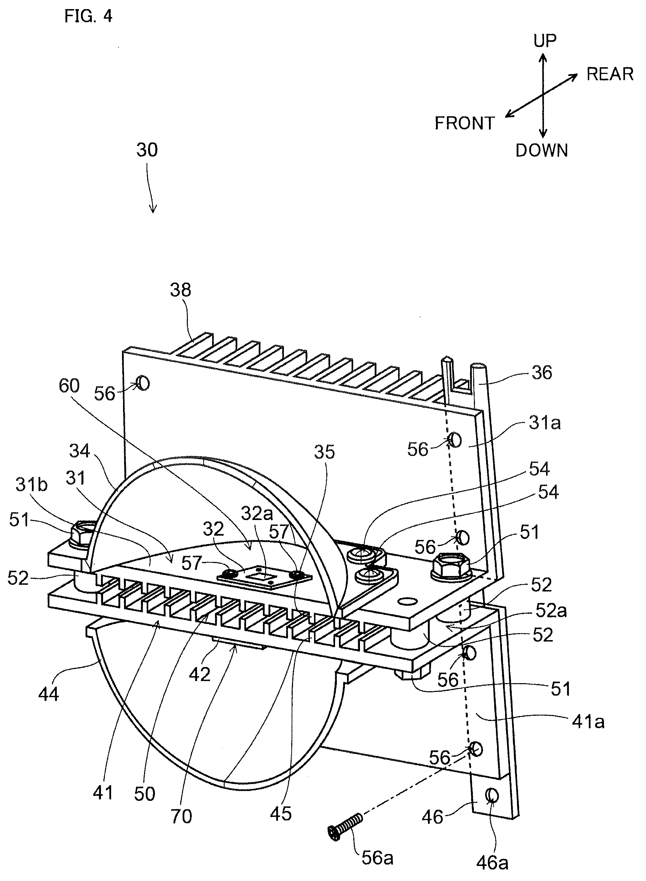

Reference is made also to FIG. 4, which is a perspective view of the LED unit 30. The LED unit 30 is configured by coupling a low beam plate-like member 31 (the upper plate member in FIG. 4) on which the low beam LED apparatus 60 is mounted to a high beam plate-like member 41 (the lower plate member in FIG. 4) on which the high beam LED apparatus 70 is mounted. The low beam LED apparatus 60 and the high beam LED apparatus 70 are attached to the low beam plate-like member 31 and the high beam plate-like member 41, respectively, by two screws 57. In the present embodiment, the low beam plate-like member 31 and the high beam plate-like member 41 have substantially the same structure, and therefore, in the following description, portions of them which have the same structure will only described in detail with reference to the low beam plate-like member 31.

In the low beam plate-like member 31 (high beam plate-like member 41), a mounting face 31 b of the low beam LED apparatus 60 (high beam LED apparatus 70) is substantially horizontal, and the low beam reflector 34 (high beam reflector 44) is fixed to the mounting face 31 b using mounting screws 54. The low beam reflector 34 (high beam reflector 44) is curved in such a manner as to cover the low beam LED apparatus 60 from above (cover the high beam LED apparatus 70 from below). Since the reflectors 34 and 44 are formed separately from the plate-like members 31 and 41, it is possible to form the plate-like members 31 and 41 from a metal which is superior in heat dissipation, and to form the reflectors 34 and 44 from a synthetic resin or the like to which metal deposition or plating is applied. Consequently, a lighting unit which is low in cost and weight and superior in heat dissipation can be formed.

It should be noted that the LED unit 30 in the present embodiment is configured such that, upon selection of low beam, only the low beam LED 32a is turned on, and upon selection of high beam, only the high beam LED 42a is turned on. However, the LED unit 30 may be configured otherwise such that, for example, upon selection of high beam, both of the LEDs 32a and 42a are turned on simultaneously. Alternatively, the light amounts of the LED apparatus 60 and 70 may be made different from each other, or the reflectors 34 and 44 may have different shapes from each other.

In the LED lighting unit 2 according to the present embodiment, both of a high cooling performance for the LED apparatus 60 and 70 and reduction in size of the LED unit 30 are achieved by fixing the low beam plate-like member 31 and the high beam plate-like member 41 in a state in which a predetermined space 50 is assured between them.

The low beam plate-like member 31 and the high beam plate-like member 41 are fixed at opposite end portions thereof by bolts 51, with cylindrical spacers 52 interposed therebetween. Thus, the space 50 for cooling is assured by the spacers 52. A plurality of cooling fins 35 are provided on a lower face of the low beam plate-like member 31 and a plurality of cooling fins 45 are provided on an upper face of the high beam plate-like member 41, and the cooling fins 35, 45 extend in an opposing relationship to each other into the space 50. The cooling fins 35 and 45 are disposed such that the longitudinal direction thereof is perpendicular to the longitudinal direction of the plate-like members 31 and 41 (the lateral direction of the vehicle). With the configuration just described, the space between the upper and lower plate-like members 31 and 41 can be effectively utilized to enhance the cooling performance for the LED apparatus 60 and 70 and the plate-like members 31 and 41.

According to the configuration described above, the plate-like members 31 and 41 are fixed in a spaced relationship from each other with the spacers 52 interposed therebetween, such that the cooling fins 35 and 45 do not contact any other member in the vertical direction. Therefore, assembly is improved, and the cooling performance for the LEDs is also improved. It should be noted that the plate-like members 31 and 41 can be formed from a resin, a metal or the like, and the cooling fins 35 and 45 can be formed from a metal such as aluminium and fixed to the plate-like members 31 and 41 by a bonding agent, fastening members or the like.

Air which passes the space 50 flows in the longitudinal direction of the vehicle along the direction of the cooling fins 35 and 45, and also flows in the lateral direction of the vehicle through gaps 52a formed at end portions of the cooling fins 35 and 45.

Further, an erected portion 31 a is provided at a rear end of the low beam plate-like member 31, such that it extends vertically upwardly. Meanwhile, an erected portion 41 a is provided at a rear end of the high beam plate-like member 41, such that it extends vertically downwardly. The erected portions 31 a and 41 a form another plane, substantially perpendicular to the mounting faces 31 b and 41 b of the LED apparatus 60 and 70, respectively. Further, in the present embodiment, the plate-like member 31 and the erected portion 31 a are formed integrally with each other, as are the plate-like member 41 and the erected portion 41 a, such that the plate-like members generally have a substantially L-shaped cross-section.

An attachment stay 36 in the form of a plate is fixed to the upper erected portion 31 a, and the adjustment mechanism 37 is attached to a left end portion (relative to the vehicle in use) of the attachment stay 36. Meanwhile, an attachment stay 46 and another attachment stay 55 are fixed to the lower erected portion 41 a. The support shaft (aiming pivot) 47 is fixed to a lower end portion of the attachment stay 46, which is in turn fixed to a left end portion (relative to the vehicle in use) of the lower erected portion 41a. An adjustment mechanism 58 is attached to a lower end portion of the attachment stay 55, which is in turn attached to a right end portion (relative to the vehicle in use) of the lower erected portion 41 a. The attachment stays 46 and 55 are fixed by fixing screws 56a fitted in through-holes 56 formed therein. Cut-outs are provided on the attachment stays 36 and 55 such that they are engaged by the adjustment mechanisms 37 and 58, respectively, and a through-hole 46a is provided in the attachment stay 46 such that it is engaged by the support shaft 47. It should be noted that also it is possible to fix the attachment stays using through-holes 56 on the right side (relative to the vehicle in use) of the erected portion 31 a, depending on the structure of the base member 20.

On a rear face (relative to the vehicle in use) of the erected portions 31 a and 41 a to which the attachment stays 36, 46 and 55 are fixed, a plurality of second cooling fins 38 are provided. By means of the second cooling fins 38, the heat capacity of the cooling fins is increased further, and even a case in which the generated heat amount by the LED apparatus 60 and 70 becomes greater can be coped with sufficiently. In the present embodiment, a heat sink is implemented by the plate-like members 31 and 41, cooling fins 35 and 45 and erected portions 31 a and 41a.

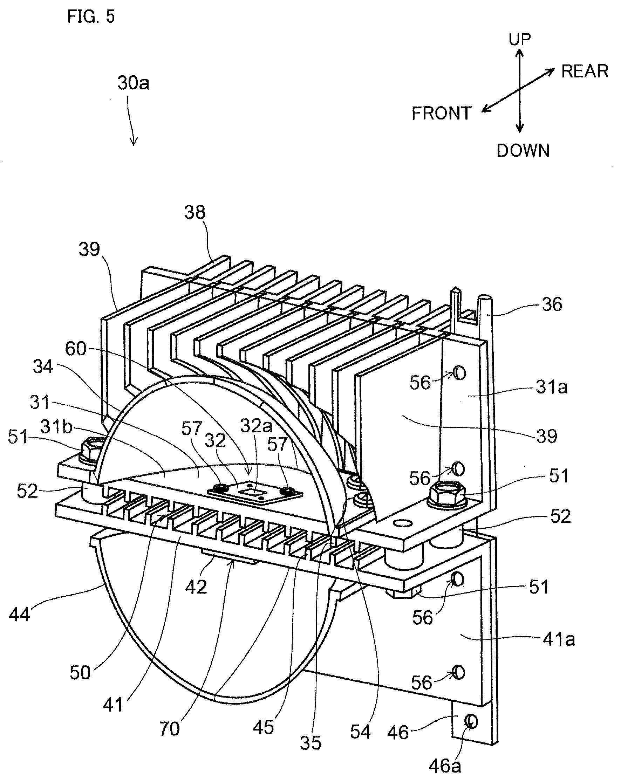

FIG. 5 is a perspective view of an LED unit 30a according to a further aspect of the invention.

Symbols used in the previous description denote like or equivalent portions. Not only are second cooling fins 38 provided on a rear face of the erected portion 31 a of the low beam plate-like member 31, but also a plurality of second cooling fins 39 are provided on a front face of the erected portion 31 a. The cooling fins 39 extend forwardly to a position close to the reflector 34 and are shaped to match the shape of a rear face of the reflector 34, and the cooling effect is enhanced further. A space is provided between the cooling fins 39 and the reflector 34, and so the heat of the cooling fins 39 is less likely to be transmitted to the reflector 34. It should also be noted that the bolts 54 for fixing the reflector 34 to the plate-like member 31 also have a heat dissipation function because they face this space.

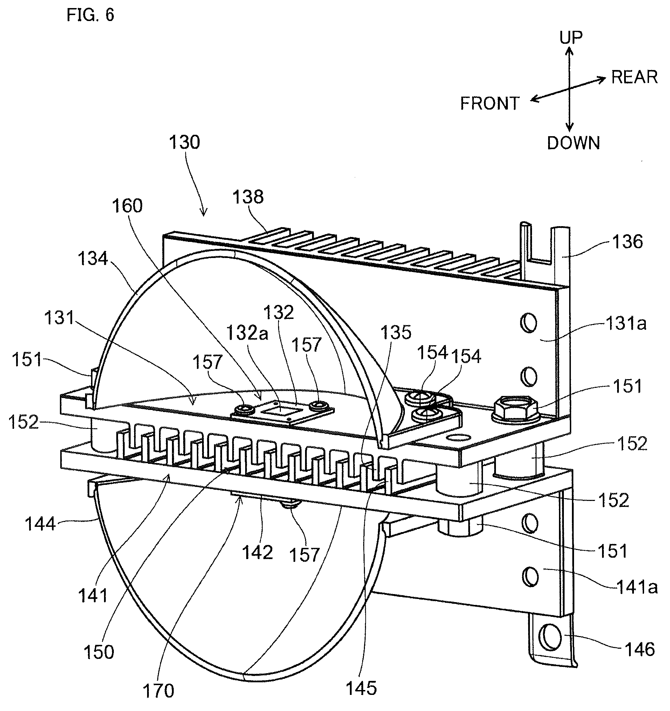

FIG. 6 is a perspective view of an LED unit 130 according to a further aspect of the invention.

In the LED unit 130, the cooling fins 135, 145 provided projecting vertically from the plate-like members 131, 141 overlap vertically with each other. According to this configuration, while a large number of cooling fins are provided on the plate-like members, it is possible to increase the vertical extent of the cooling fins, or reduce the vertical dimension of the LED unit 130.

The basic structure of the LED unit 130 is similar to that of the LED unit 30 described above; however, the LED unit 130 differs in that, since cooling fins 135 and 145 are formed in an offset relationship from each other, when the low beam plate-like member 131 and the high beam plate-like member 141 are opposed to each other, the cooling fins thereof vertically overlap with each other without contacting each other.

The low beam plate-like member 131 and the high beam plate-like member 141 (which have the same shape) are fixed together by bolts 151 with four spacers 152 interposed therebetween, such that they have a gap 150 therebetween. LED apparatus 160 and 170 are mounted on the low beam plate-like member 131 and the high beam plate-like member 141, respectively. The plurality of cooling fins 135 and 145 are formed on the plate-like members 131 and 141, respectively.

The following description is given using the low beam plate-like member 131 as a representative. The LED apparatus 160 for a low beam is fixed to the low beam plate-like member 131 by screws 157, and a curved reflector 134 is fixed to the low beam plate-like member 131 by screws 154. The LED apparatus 160 is configured from a board 132 and an LED 132a. Attachment stays 136 and 146 are fixed to left end portions (relative to the vehicle in use) of the erected portions 131a and 141 a, respectively. The plate-like members 131 and 141 are fixed to each other by bolts 151 with spacers 152 interposed therebetween. Further, the plurality of cooling fins 135 provided on a lower face of the low beam plate-like member 131 and the plurality of cooling fins 145 provided on an upper face of the high beam plate-like member 141 extend into the gap 150 for cooling assured by the spacers 152, such that the cooling fins 135 and the cooling fins 145 are disposed alternately in the horizontal direction and overlap with each other in the vertical direction. Consequently, the vertical dimension of the cooling fins 135 and 145 can be increased.

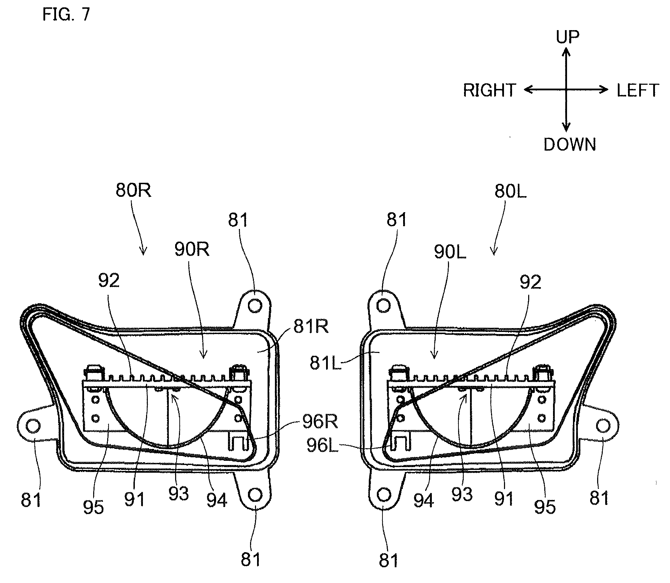

FIG. 7 is a front elevational view showing an example wherein LED units 90L and 90R of the same structure are used in left and right headlamps 80L and 80R. The LED units according to the present embodiment are configured such that plate-like members for a high beam and a low beam are formed in a same shape, so that a common mould for casting or injection moulding can be used for them, thus improving the productivity. By utilizing this, the headlamps 80L and 80R can be configured from a common plate-like member 91.

The left side lighting unit 80L is configured by attaching the left side LED unit 90L to a left side housing 81 L having attachment flanges 81 for attachment to the vehicle body. Similarly, the right side lighting unit 80R is configured by attaching the right side LED unit 90R to a right side housing 81 R having attachment flanges 81 for attachment to the vehicle body. In this instance, the left and right LED units 90L and 90R can cope with either of the left and right housings 81 L and 81 R by forming the plate-like member 91 on which cooling fins 92 are formed, an LED apparatus 93, a reflector 94 and an erected portion 95 commonly and exchangeably using attachment stays 96L and 96R fixed to the erected portion 95 between the LED units 90L and 90R. It is possible for the headlamps to cope with a structure wherein only the LED apparatus 93 and the reflector 94 are made different between the headlamps, such that different roles for a high beam and a low beam are allocated to the left and right lamps.

As described above, in the embodiment according to the invention, the LED lighting unit for a vehicle, which includes two plate-like members on which LED apparatus are mounted as light sources and reflectors disposed so as to cover the LED apparatus and configured to reflect light from the LED apparatus forwardly and wherein the two plate-like members are disposed in an opposing relationship to each other with a space provided therebetween such that mounting faces of the LED apparatus are directed to the outer sides, is configured such that cooling fins are provided on the two plate-like members in such a manner as to extend in an opposing relationship to each other toward the space. Therefore, it is possible to effectively utilize the space between the two plate-like members to dissipate heat generated by the LEDs from the rear side to the mounting faces.

It should be noted that the shape and the structure of the housing and the lens of the LED lighting unit, the shape and the structure of the LED apparatus and the plate-like members, the shape and the number of the cooling fins, the shape and the colour density of the extension, the shape and the structure of the reflectors, the structure of the optical axis adjustment mechanisms and so forth, are not limited to those of the embodiments, and various alterations are possible. For example, the two plate-like members may be disposed such that the upper one is used for a high beam while the lower one is used for a low beam. Alternatively, a plate-like member and a reflector may be formed integrally, or a plate-like member and an erected portion may be configured as separate members, which are fixed to each other by a fastening member. The LED lighting unit for a vehicle can be applied not only to a motorcycle but also to various other vehicles of the saddle type, such as three- and four-wheeled vehicles.

## Claims

1. An LED lighting unit (2) for a vehicle, said unit including two plate-like members (31, 41) on which LED apparatus (60, 70) are mounted as light sources, and reflectors (34, 44) disposed so as to cover the LED apparatus (60, 70) and configured to reflect light from the LED apparatus (60, 70) forwardly relative to the vehicle, wherein the two plate-like members (31, 41) are disposed in an opposing relationship to each other with a space (50) provided therebetween such that the mounting faces (31 b, 41 b) of the plate-like members (31, 41) to which the LED apparatus (60, 70) are mounted face away from the space (50),
and wherein cooling fins (35, 45) are provided on the two plate-like members (31, 41) so as to extend into the space (50) in an opposing relationship to each other;
**characterized in that** the cooling fins (35, 45) are formed so as to overlap with each other in the vertical direction without contacting each other when the two plate-like members (31, 41) are fixed;
**in that** erected portions (31 a, 41 a) having a face substantially perpendicular to the mounting faces (31 b, 41 b) of the LED apparatus (60, 70) are formed at one end portion of the plate-like members (31, 41) to the rear of the reflectors (34, 44), and second cooling fins (38, 39) are provided on the erected portions (31 a, 41 a);
and **in that** the second cooling fins (38, 39) are formed on both faces of the erected portions (31 a, 41 a), and the second cooling fins (38, 39) on the front faces of the erected portions are formed so as to extend to a position in proximity to the reflectors (34, 44) conforming with a shape of the reflectors (34, 44).

2. The LED lighting unit for a vehicle according to claim 1, wherein the cooling fins (35, 45) are disposed such that a longitudinal direction thereof is perpendicular to a longitudinal direction of the two plate-like members (31, 41).

3. The LED lighting unit for a vehicle according to claim 1 or 2, wherein the plate-like members (31, 41) and the reflectors (34, 44) are formed separately from each other.

4. The LED lighting unit for a vehicle according to any one of claims 1 to 3, wherein one of the two plate-like members (31, 41) configures a high beam while the other of the two plate-like members (31, 41) configures a low beam.

5. The LED lighting unit for a vehicle according to any one of claims 1 to 4, wherein
the two plate-like members (31, 41) are spaced from and fixed to each other with a spacer (52) interposed therebetween, and
the cooling fins (35, 45) are disposed so as not to contact any other member in the vertical direction thereof.

6. The LED lighting unit for a vehicle according to any one of claims 1 to 5, wherein the two plate-like members (31, 41) have the same shape as each other.

## Patentansprüche

1. LED-Beleuchtungseinheit (2) für ein Fahrzeug, wobei die Einheit zwei plattenähnliche Elemente (31, 41), auf denen eine LED-Vorrichtung (60, 70) als Lichtquellen befestigt ist, und Reflektoren (34, 44), die angeordnet sind, um die LED-Vorrichtung (60, 70) abzudecken, und konfiguriert sind, um Licht von der LED-Vorrichtung (60, 70) relativ zu dem Fahrzeug nach vorne zu reflektieren, enthält, wobei die zwei plattenähnlichen Elemente (31, 41) in einer gegenüberliegenden Beziehung zueinander mit einem Abstandsraum (50), der zwischen ihnen vorgesehen ist, derart angeordnet sind, dass die Befestigungsflächen (31b, 41b) der plattenähnlichen Elemente (31, 41), an denen die LED-Vorrichtung (60, 70) befestigt ist, abgewandt von dem Abstandsraum (50) liegen,
und wobei Kühlrippen (35, 45) auf den zwei plattenähnlichen Elementen (31, 41) bereitgestellt sind, um sich in den Abstandsraum (50) in einer gegenüberliegenden Beziehung zueinander zu erstrecken;
**dadurch gekennzeichnet, dass** die Kühlrippen (35, 45) so gebildet sind, um sich gegenseitig in der vertikalen Richtung zu überlappen, ohne sich dabei gegenseitig zu berühren, wenn die zwei plattenähnlichen Elemente (31, 41) befestigt werden;
dass aufgerichtete Abschnitte (31a, 41a), die eine zu den Befestigungsflächen (31b, 41b) der LED-Vorrichtung (60, 70) im Wesentlichen senkrechte Fläche aufweisen, an einem Endabschnitt der plattenähnlichen Elemente (31, 41) an der Rückseite der Reflektoren (34, 44) gebildet sind, und dass zweite Kühlrippen (38, 39) auf den aufgerichteten Abschnitten (31a, 41a) bereitgestellt sind;
und dass die zweiten Kühlrippen (38, 39) auf beiden Flächen der aufgerichteten Abschnitte (31a, 41a) gebildet sind und dass die zweiten Kühlrippen (38, 39) auf den Vorderflächen der aufgerichteten Abschnitte gebildet sind, um sich bis zu einer Position in Nähe der Reflektoren (34, 44) zu erstrecken, wobei sie dort mit einer Form der Reflektoren (34, 44) übereinstimmen.

2. LED-Beleuchtungseinheit für ein Fahrzeug nach Anspruch 1, wobei die Kühlrippen (35, 45) derart angeordnet sind, dass eine Längsrichtung derselben senkrecht zu einer Längsrichtung der zwei plattenähnlichen Elemente (31, 41) ist.

3. LED-Beleuchtungseinheit für ein Fahrzeug nach Anspruch 1 oder 2, wobei die plattenähnlichen Elemente (31, 41) und die Reflektoren (34, 44) getrennt voneinander gebildet werden.

4. LED-Beleuchtungseinheit für ein Fahrzeug nach einem der Ansprüche 1 bis 3, wobei eines der zwei plattenähnlichen Elemente (31, 41) ein Fernlicht konfiguriert, während das andere der zwei plattenähnlichen Elemente (31, 41) ein Abblendlicht konfiguriert.

5. LED-Beleuchtungseinheit für ein Fahrzeug nach einem der Ansprüche 1 bis 4, wobei
die zwei plattenähnlichen Elemente (31, 41) mit einem Abstandshalter (52), der zwischen ihnen eingefügt ist, voneinander beabstandet und aneinander befestigt sind, und
die Kühlrippen (35, 45) angeordnet sind, um in der vertikalen Richtung derselben kein anderes Element zu berühren.

6. LED-Beleuchtungseinheit für ein Fahrzeug nach einem der Ansprüche 1 bis 5, wobei die zwei plattenähnlichen Elemente (31, 41) einander die gleiche Form aufweisen.

## Revendications

1. Unité d'éclairage à DEL (2) pour un véhicule, ladite unité incluant deux éléments lamelliformes (31, 41) sur lesquels des dispositifs à DEL (60, 70) sont montés en tant que sources de lumière, et des réflecteurs (34, 44) disposés de façon à couvrir les dispositifs à DEL (60, 70) et configurés pour réfléchir la lumière provenant des dispositifs à DEL (60, 70) vers l'avant par rapport au véhicule, dans laquelle les deux éléments lamelliformes (31, 41) sont disposés dans une relation opposée l'un par rapport l'autre avec un espace (50) prévu entre eux de sorte que les faces de montage (31b, 41b) des éléments lamelliformes (31, 41) auxquelles les dispositifs à DEL (60, 70) sont montés font face au loin de l'espace (50),
et dans laquelle des ailettes de refroidissement (35, 45) sont prévues sur les deux éléments lamelliformes (31, 41) de façon à s'étendre dans l'espace (50) dans une relation opposée l'une par rapport à l'autre ;
**caractérisée en ce que** les ailettes de refroidissement (35, 45) sont formées de façon à se chevaucher dans la direction verticale sans entrer en contact l'une avec l'autre quand les deux éléments lamelliformes (31, 41) sont fixés ;
**en ce que** des parties érigées (31a, 41a) ayant une face sensiblement perpendiculaire aux faces de montage (31 b, 41 b) des dispositifs à DEL (60, 70) sont formées au niveau d'une partie d'extrémité particulière des éléments lamelliformes (31, 41) à l'arrière des réflecteurs (34, 44), et des secondes ailettes de refroidissement (38, 39) sont prévues sur les parties érigées (31a, 41a) ;
et **en ce que** les secondes ailettes de refroidissement (38, 39) sont formées sur les deux faces des parties érigées (31a, 41a), et les secondes ailettes de refroidissement (38, 39) sur les faces avant des parties érigées sont formées de façon à s'étendre jusqu'à une position à proximité des réflecteurs (34, 44) se conformant avec une forme des réflecteurs (34, 44).

2. Unité d'éclairage à DEL pour un véhicule selon la revendication 1, dans laquelle les ailettes de refroidissement (35, 45) sont disposées de sorte qu'une direction longitudinale de ces dernières est perpendiculaire à une direction longitudinale des deux éléments lamelliformes (31, 41).

3. Unité d'éclairage à DEL pour un véhicule selon la revendication 1 ou 2, dans laquelle les éléments lamelliformes (31, 41) et les réflecteurs (34, 44) sont formés séparément les uns des autres.

4. Unité d'éclairage à DEL pour un véhicule selon n'importe laquelle des revendications 1 à 3, dans laquelle un des deux éléments lamelliformes (31, 41) configure un feu de route tandis que l'autre des deux éléments lamelliformes (31, 41) configure un feu de croisement.

5. Unité d'éclairage à DEL pour un véhicule selon n'importe laquelle des revendications 1 à 4, dans laquelle
les deux éléments lamelliformes (31, 41) sont espacés l'un de l'autre et fixés l'un à l'autre avec une entretoise (52) interposée entre eux, et
les ailettes de refroidissement (35, 45) sont disposées afin de ne pas entrer en contact avec tout autre élément dans leur direction verticale.

6. Unité d'éclairage à DEL pour un véhicule selon n'importe laquelle des revendications 1 à 5, dans laquelle les deux éléments lamelliformes (31, 41) ont la même forme l'un comme l'autre.
